# EUROPÄISCHE PATENTSCHRIFT

(11) **EP 2 662 174 B1**
(45) Veröffentlichungstag und Bekanntmachung des Hinweises auf die Patenterteilung: **15.07.2015**
(21) Anmeldenummer: 13167110.9
(22) Anmeldetag: 08.05.2013
(51) Int. Cl.: B25B 31/00, B25B 13/48, B23G 5/14, B23G 5/06, B25B 13/06

(54) **Rohrförmiges Schraubwerkzeug zum Einschrauben einer mit Außengewinde versehenen Hohlschraube in eine Bohrung**
Tubular screwing tool for screwing a hollow screw with an external thread into a hole
Outil de vissage tubulaire pour visser une vis creuse pourvue d'un filetage extérieur dans un alésage

(30) Priorität: 09.05.2012 DE 102012104050
(43) Veröffentlichungstag der Anmeldung: 13.11.2013
(73) Patentinhaber: Ejot GmbH & Co. KG, 57334 Bad Laasphe (DE)
(72) Erfinder: Achenbach, Michael, 35236 Breidenbach (DE); Keller, Karl-Georg, 57319 Bad Berleburg (DE)
(74) Vertreter: Puschmann Borchert Bardehle Patentanwälte Partnerschaft mbB

(56) Entgegenhaltungen:
- DE-A1- 1 752 190
- DE-U1-202010 005 703
- US-A- 2 616 103
- US-A1- 2011 259 158

## Beschreibung

Die Erfindung bezieht sich auf ein rohrförmiges Schraubwerkzeug zum Einschrauben einer mit Außengewinde versehenen Hohlschraube in eine Bohrung in einem Bauteil. Derartige Hohlschrauben werden häufig in Kraftfahrzeugscheinwerfern zur Halterung von Beleuchtungskörpern verwendet. Beim Einschrauben einer mit Außengewinde versehenen Hohlschraube in eine Bohrung ergibt sich häufig das Problem, dass beim Eindrehen der Hohlschraube diese sich ein Gewinde ausformen muss, das zu dem Außengewinde der Hohlschraube passt, wobei in der Regel eine Verspanung des Materials des Bauteils eintritt. Derartige Späne sind meist im Rahmen der weiteren Verwendung der eingeschraubten Hohlschraube ein Problem, sie werden in der Regel abgesaugt, was allerdings auch nur dann vollständig erfolgreich ist, wenn die Späne sich nicht in den Gewindegängen sowohl der Hohlschraube als auch des Bauteils festsetzen.

Ein rohförmiges Schraubwerkzeug gemäß dem Oberbegriff des Anspruchs 1 ist aus DE 20 2010 005 703 U1 bekannt. Ein aufspreizbarer Gewindebohrer, der beim Eindrehen in die Bohrung soweit aufspreizbar ist, dass er ein auf Aufspreizteilen sitzendes Außengewinde bildet, das durch Aufspreizen seiner Bestandteile mit der Drehung eines Mitnahmebolzens ein Innengewinde in die Bohrung schneidet, in das eine Hohlschraube eindrehbar ist, ist aus DE 17 52 190 A1 bekannt

Durch die Erfindung wird in besonderer Weise das Schneiden des Innengewindes so gestaltet, dass die sich zwangsläufig ausbildenden Späne in besonders günstiger Weise entfernt werden können. Dies geschieht dadurch, dass das Schraubwerkzeug einen die Hohlschraube durchsetzenden Mitnahmebolzen aufweist, wobei der Mitnahmebolzen mit einem Mitnahmeprofil versehen ist, und ferner der Mitnahmebolzen an seinem aus der Hohlschraube herausragenden Ende einen aufspreizbaren Gewindebohrer aufweist, der beim Eindrehen in die Bohrung soweit aufspreizbar ist, dass dieser ein auf Aufspreizteilen sitzendes Außengewinde bildet, das durch Aufspreizen seiner Bestandteile mit der Drehung des Mitnahmebolzens ein Innengewinde in die Bohrung schneidet, in das die Hohlschraube eindrehbar ist.

Die Spanbildung entsteht dabei durch den aufspreizbaren Gewindebohrer. Da dieser nach Schneiden des Innengewindes aus der Hohlschraube herausragt und dabei die Aufspreizteile relativ weit geöffnet sind, liegt dieses Ende des Gewindebohrers für einen Luftstrom frei, so dass irgendwelche dort haftenden Späne problemlos entweder abgesogen oder abgeblasen werden können.

Vorzugsweise weist der Mitnahmebolzen eine Längsbohrung auf, in welcher ein axial verschiebbares Spreizmittel geführt ist. Das Spreizmittel umfasst an seinem, dem Gewindebohrer zugewandten Ende einen Spreizkonus, der in eine Spreizstange übergeht, die insbesondere den Mitnahmebolzen durchragt. Durch eine axiale Verschiebung des Spreizmittels in Richtung des Gewindebohrers erfolgt dessen Aufspreizung. Ferner kann das Spreizmittel selbst von Kanälen eines beliebigen Querschnitts durchsetzt sein. Durch das Vorsehen der Kanäle wird eine Material- und / oder Gewichtsersparnis des Spreizmittels erzielt. Die Kanäle sind insbesondere als Bohrungen ausgebildet.

Die Kanäle können vorzugsweise derart ausgebildet sein, dass sie das Abblasen oder Absaugen der während des Schneidvorgangs entstehenden Späne ermöglichen, wodurch auf die Handhabung zusätzlicher Absaug- oder Abblaseinrichtungen verzichtet werden kann.

Zusätzlich kann an dem Spreizmittel eine Bewegungsbegrenzung vorgesehen sein, die eine genaue und reproduzierbare Einstellung des Gewindedurchmessers erlaubt.

Ferner kann das Schraubwerkzeug ein Schraubmittel aufweisen, das einerseits drehfest mit dem Mitnahmebolzen verbindbar ist, andererseits mit dem Kopf der Hohlschraube in Eingriff gebracht werden kann. Dadurch kann mit dem Schraubwerkzeug sowohl ein Vorschneiden des Gewindes mit dem Gewindebohrer als auch das Einschrauben der Hohlschraube in einem Arbeitsschritt erfolgen. Das Schraubmittel kann für einen Außenantrieb oder einen Innenantrieb ausgebildet sein.

In einer besonders vorteilhaften Ausführungsform, kann das Schraubmittel in axialer Richtung verschiebbar und in axialer Richtung federbelastet sein. Die Federparameter sind derart gewählt, dass die Feder bei einem bestimmten Anpressdruck der Hohlschraube an das Bauteil nachgibt. Dieser Anpressdruck ist so gewählt, dass er geringer ist als der für das Schneiden eines Gewindes mit der Hohlschraube notwendige Anpressdruck. Dadurch wird das selbsttätige Schneiden eines Gewindes durch die Hohlschraube verhindert. Die Hohlschraube dreht dann mit vermindertem Anpressdruck so lange an der Oberfläche des Bauteils bis es in das durch den Gewindebohrer vorgeschnittene Gewinde eingreift und eingedreht wird, was in der Regel nach höchstens einer Umdrehung erfolgt. Die Federparameter, wie bspw. Länge, Durchmesser, Federkonstante etc., können abhängig vom Anwendungsfall ausgelegt werden.

In den Figuren ist ein Ausführungsbeispiel der Erfindung dargestellt. Es zeigen:
- Fig. 1: das Schraubwerkzeug mit aus diesem axial herausragenden Aufspreizkonus und vor dem Aufspreizkonus angeordneter Hohlschraube;
- Fig. 2: die Gestaltung gemäß Fig. 1 mit auf das Schraubwerkzeug aufgeschobener Hohlschraube;
- Fig. 2a: eine Schnittansicht des Aufspreizkonus mit Bohrungen;
- Fig. 3a: die Gestaltung gemäß Fig. 2 mit in das Schraubwerkzeug eingezogenem Aufspreizkonus;
- Fig. 3b: eine Draufsicht auf die Seite des Schraubwerkzeuges mit dem Aufspreizkonus;
- Fig. 4: die Gestaltung gemäß Fig. 3 mit aufgespreiztem Gewindebohrer und durch das Bauteil hindurch geschraubtem und damit geschnittenem Gewinde;
- Fig. 5: das Bauteil mit eingeschraubter Hohlschraube und hindurch getretenem, aufgespreiztem Gewindebohrer;
- Fig. 6: die eingeschraubte Hohlschraube mit zusammengezogenem Gewindebohrer;
- Fig. 7: das Bauteil mit eingeschraubter Hohlschraube und durch diese hindurch gezogenem Aufspreizkonus;
- Fig. 8: das Schraubwerkzeug mit Anpressdruckregulation im gespannten Zustand, und
- Fig. 9: das Schraubwerkzeug nach Fig. 8 mit Anpressdruckregulation im entspannten Zustand.

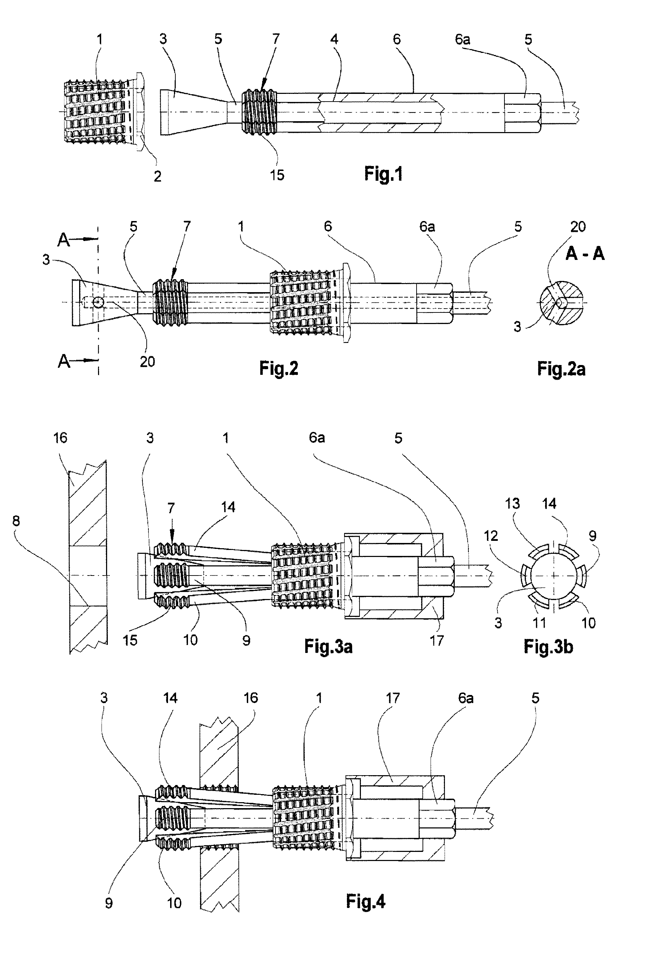

In der Fig. 1 ist die Hohlschraube 1 dargestellt, die ein Durchgangsloch 2 aufweist, und die außen mit einem Gewinde versehen ist, das aus einzelnen Segmenten zusammengesetzt ist, was auf die Herstellung dieser Hohlschraube 1 zurückgeht. Vor dem Durchgangsloch 2 ist das Schraubwerkzeug angeordnet, umfassend einen Aufspreizkonus 3 mit Spreizstange 5 und einen Mitnahmebolzen 6 mit einer Längsbohrung 4, wobei der Mitnahmebolzen 6 von der Spreizstange 5 durchsetzt wird. Ferner umfasst das Schraubwerkzeug einen Gewindebohrer 7, der am Mitnahmebolzen 6 angeordnet ist und ein Schneidgewinde 15 aufweist, das zu dem Gewinde in der Hohlschraube passt. Die Spreizstange 5 ragt einerseits auf dem dem Aufspreizkonus 3 gegenüberliegenden Ende heraus und geht auf der anderen Seite in den Aufspreizkonus 3 über. Auf dem Aufspreizkonus 3 abgewandten Ende besitzt das Schraubwerkzeug das Mitnahmeprofil 6a, das hier aus einem Sechskant besteht.

In der Fig. 2 ist das gleiche Schraubwerkzeug dargestellt, allerdings mit auf dieses aufgeschobener Hohlschraube 1. Damit weist das Schraubwerkzeug eine Lage auf, die als Ausgangslage für das spätere Einschrauben der Hohlschraube vorangeht. In der Fig. 2 und Fig. 2a sind Bohrungen 20 im Spreizmittel vorgesehen, welche für den Durchlass eines Luftstroms eingerichtet sind. Das Spreizmittel kann, indem es an eine Abblas- oder Absaugeinrichtung angeschlossen wird, Späne direkt an ihrem Entstehungsort entfernen.

In Fig. 3a ist das Schraubwerkzeug mit aufgespreiztem Gewindebohrer 7 dargestellt. Der Gewindebohrer 7 besteht hier aus den Aufspreizteilen 9 bis 14, die mit einem Innenkonus versehen sind, auf den das Spreizmittel bestehend aus Spreizstange 5 und Aufspreizkonus 3, mit dem Aufspreizkonus 3 wirkt, wodurch sich die einzelnen Aufspreizteile 9 bis 14 zu einem einen größeren Durchmesser aufweisenden Schneidgewinde 15 anordnen, das dann zum Schneiden eines Gewindes verwendet wird (siehe Fig. 4).

Die Gestaltung gemäß Fig. 3a wird jetzt unter Drehung des Mitnahmeprofils 6a in die Durchgangsbohrung 8 des Bauteils 16 eingeführt, wodurch die einzelnen Aufspreizteile 9 bis 14 des Gewindebohrers 7 gemäß ihrer äußeren Form, das in der Figur 4 deutlich dargestellte Gewinde schneiden. Damit hat das Bauteil 16 das erforderliche Innengewinde erhalten, so dass es später das Einschrauben der Hohlschraube 1 ermöglicht.

Die Fig. 3b zeigt die axiale Draufsicht auf den Aufspreizkonus 3 und die diesen umgebenden Kranz der Aufspreizteile 9 bis 14.

Wesentlich bei dieser Gestaltung ist, dass die einzelnen Aufspreizteile 9 bis 14 nach Schneiden des Gewindes (siehe Fig. 4) in gespreiztem Zustand vorliegen, so dass ein auf das betreffende Ende des Schraubwerkzeugs gerichteter Luftstrom an dieser Stelle irgendwie haftende Späne, die von dem Gewindeschneiden herrühren, problemlos weggeblasen oder abgesaugt werden können, so dass anschließend nach Herausdrehen und Wegführen des Schraubwerkzeugs ein Bauteil vorliegt, an dem keinerlei Späne haften, so dass in das geschnittene Gewinde in diesem Bauteil die Hohlschraube eingedreht werden kann.

Das gemäß Fig. 4 eingeschnittene Gewinde erlaubt jetzt das Eindrehen der Hohlschraube 1 in das Gewinde des Bauteils. Zur Durchführung des Schraubvorgangs, ist das Schraubwerkzeug mit einem Schraubmittel versehen, welches als außenantreibende Nuss 17 ausgebildet ist. Die Nuss 17 ist drehfest mit dem Mitnahmeprofil 6a verbunden und umgreift den Kopf der Hohlschraube. Durch Drehung des Mitnahmeprofils 6a wird nun die Hohlschraube 1 mit dem Bauteil 16 verschraubt werden.

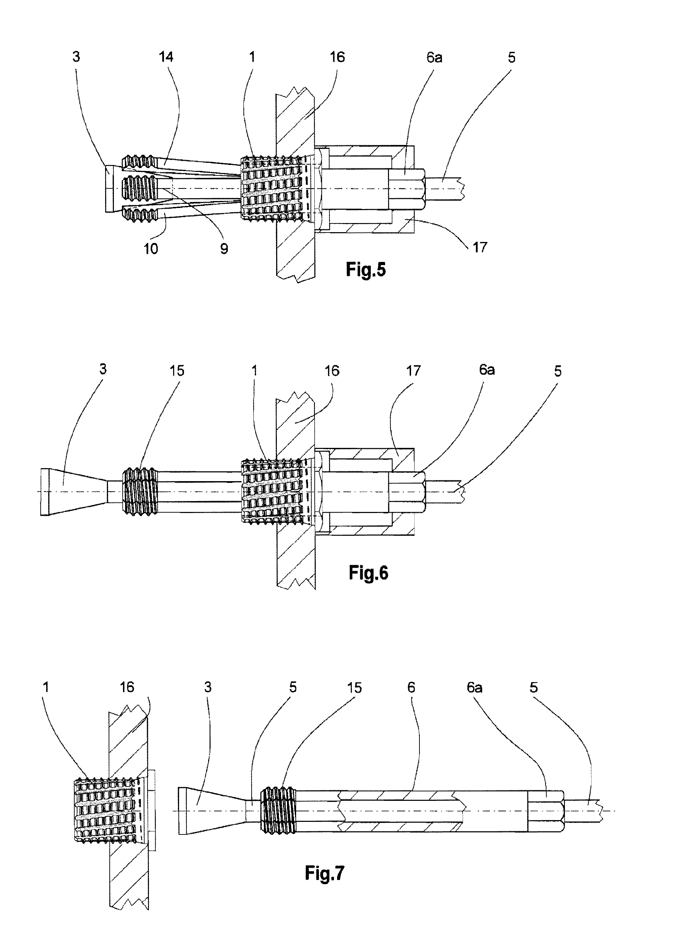

Fig. 5 zeigt den Zustand nach erfolgtem Einschraubvorgang.

Der Vorgang des Rückführens des Schraubwerkzeugs mit zurückgeführtem Aufspreizkonus 3 wird in den Figs. 6 und 7 gezeigt. Nach dem Einschraubvorgang wird dann der Aufspreizkonus 3 vom Schneidgewinde 15 weggeschoben, wodurch die Aufspreizteile 9 bis 14 des Gewindebohrers 7 wieder in die ursprüngliche Lage zusammenrücken und damit die Rückführung des Schraubwerkzeugs in eine Lage ermöglichen, wie sie in Figur 7 dargestellt ist. Hier wird die Hohlschraube 1 in das Bauteil 16 vollständig eingeschraubt und das Schraubwerkzeug mit seinem Aufspreizkonus 3 vor dem Bauteil 16 liegend und frei von diesem dargestellt.

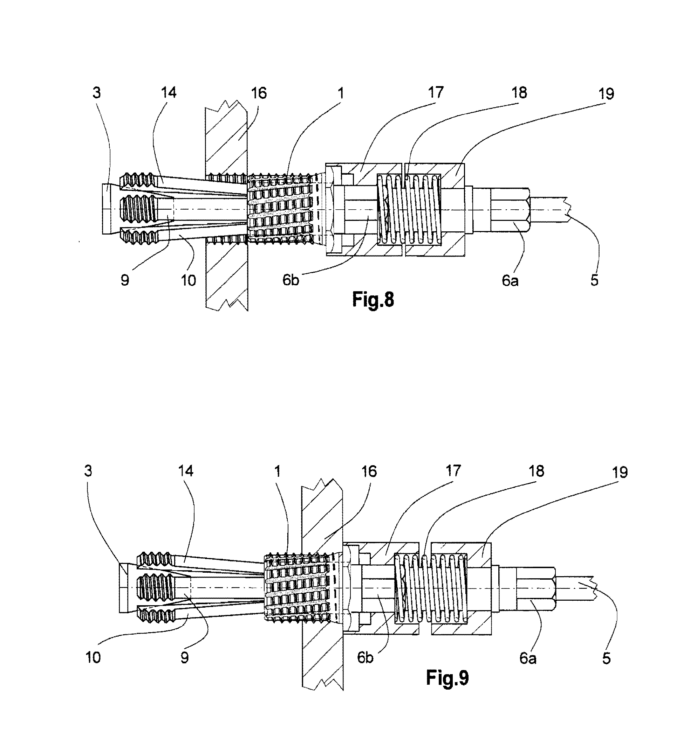

Fig. 8 zeigt eine Ausführung des Schraubwerkzeugs, bei welchem die Nuss 17 in axialer Richtung gegen eine Feder 18 wirkt. Die Nuss 17 wird durch ein weiteres Mitnahmeprofil 6b drehfest geführt. Die Feder 18 stützt sich über eine Fassung 19 gegenüber dem Mitnahmeprofil 6 in axialer Richtung ab. Die Federparameter der Feder 18 sind derart ausgelegt, dass die Feder 18 lediglich die Ausübung eines Anpressdrucks auf die Hohlschraube 1 zulässt, der geringer ist als der Anpressdruck, der für ein selbsttätiges Schneiden eines Gewindes notwendig wäre. Fig. 8 zeigt den Betriebsfall, bei dem der aufgebrachte Druck von der Feder 18 aufgenommen wird, wodurch sich die Hohlschraube 1 so lange an der Oberfläche des Bauteils 16 dreht, bis die Hohlschraube 1 in das zuvor geschnittene Gewinde eingreift und dieses eingeschraubt wird, ohne selbst ein zweites Gewinde zu schneiden.

Fig. 9 zeigt die Feder 18 in einem entlasteten Zustand. Wie hier dargestellt, ist nur ein geringer Anpressdruck für das Einschrauben der Hohlschraube 1 in das Gewinde notwendig. Dieser Anpressdruck wird abhängig von den Federparametern an die Hohlschraube 1 vermittelt. Die Feder 18 wird im eingeschraubten Zustand entlastet und verschiebt die Nuss 17 relativ zum Mitnahmebolzen 6 in Richtung der Hohlschraube 1.

## Patentansprüche

1. Rohrförmiges Schraubwerkzeug zum Einschrauben einer mit Außengewinde versehenen Hohlschraube (1) in eine Bohrung (8) in einem Bauteil (16), **dadurch gekennzeichnet, dass** das Schraubwerkzeug einen die Hohlschraube (1) durchsetzenden Mitnahmebolzen (6) mit einem Mitnahmeprofil (6a) aufweist, der an seinem aus der Hohlschraube (1) herausragenden Ende einen aufspreizbaren Gewindebohrer (7) aufweist, der beim Eindrehen in die Bohrung (8) soweit aufspreizbar ist, dass dieser ein auf Aufspreizteilen (9 bis 14) sitzendes Außengewinde (15) bildet, das durch Aufspreizen seiner Bestandteile mit der Drehung des Mitnahmebolzens (6) ein Innengewinde in die Bohrung (8) schneidet, in das die Hohlschraube (1) eindrehbar ist.

2. Rohrförmiges Schraubwerkzeug nach Anspruch 1, **dadurch gekennzeichnet, dass** der Mitnahmebolzen (6) eine Längsbohrung (4) aufweist, in welcher ein Spreizmittel, umfassend einen Aufspreizkonus (3) und eine Spreizstange (5), geführt ist.

3. Rohrförmiges Schraubwerkzeug nach Anspruch 2, **dadurch gekennzeichnet, dass** der Gewindebohrer (7) durch eine axiale Verschiebung des Aufspreizkonus (3) in Richtung des Gewindebohrers (7) aufgespreizbar ist.

4. Rohrförmiges Schraubwerkzeug nach Anspruche 2 oder 3, **dadurch gekennzeichnet, dass** das Spreizmittel mit Kanälen (20) durchsetzt ist, welche eingerichtet sind einen Luftstrom zu führen.

5. Rohrförmiges Schraubwerkzeug nach einem der vorangehenden Ansprüche, **dadurch gekennzeichnet, dass** ein Schraubmittel (17) zum Verschrauben der Hohlschraube (1) vorgesehen ist, welches drehfest mit dem Mitnahmebolzen (6) verbunden ist.

6. Rohrförmiges Schraubwerkzeug nach Anspruch 5, **dadurch gekennzeichnet, dass** eine Feder (18) vorgesehen ist, welche ein in axiale Richtung verschiebbares Schraubmittel (17) in axialer Richtung mit einer Federkraft beaufschlagt.

## Claims

1. Tubular screwing tool for screwing an externally threaded hollow screw (1) into a drilled hole (8) in a component (16) **characterized in that** said screwing tool has a driving pin (6) extending through said hollow screw (1) and which includes a drive profile (6a) and, on its end protruding from said hollow screw (1), a spreadable screw tap (7) which can be spread open to such an extent when being screwed into said hole (8) that it will form an external thread (15) sitting on spreading parts (9 to 14) which - by spreading apart its components during rotation of the driving pin (6) - will cut an internal thread into said hole (8), into which the hollow screw (1) can then be rotatably inserted.

2. The tubular screwing tool of claim 1 **characterized in that** said driving pin (6) includes a longitudinal bore (4) within which a spreading device comprising an expanding cone (3) and a spreader bar (5) is guided.

3. The tubular screwing tool of claim 2 **characterized in that** the screw tap (7) can be spread open by axially displacing the expanding cone (3) in the direction of the screw tap (7).

4. The tubular screwing tool of claims 2 or 3 **characterized in that** the spreading device is interspersed with ducts (20) which are adapted to guide an air flow.

5. The tubular screwing tool of one of the preceding claims **characterized in that** a screwing device (17) is provided for screwing in the hollow screw (1), which screwing device (17) is non-rotatably connected to said driving pin (6).

6. The tubular screwing tool of claim 5 **characterized in that** a spring (18) is provided which exerts a spring force in an axial direction on a screwing device (17) that can be axially displaced.

## Revendications

1. . Outil de vissage tubulaire pour visser une vis creuse pourvue d'un filetage extérieur (1) dans l'alésage (8) d'un module de construction (16), **caractérisé en ce que** l'outil de vissage présente un boulon d'entraînement (6), qui doit s'insérer dans la vis creuse (1), muni d'un profil d'entraînement (6a) dont l'extrémité qui saillit de la vis creuse (1) présente un taraud expansible (7) pouvant s'écarter lorsque vissé dans l'alésage (8) de façon à former, sur des pièces expansibles (9 à 14), un filetage extérieur (15) venant couper un filetage intérieur par l'écartement de ses composants dû à la rotation du boulon d'entraînement (6) dans un alésage (8) dans lequel la vis creuse (1) peut être vissée.

2. . Outil de vissage tubulaire selon la revendication 1, **caractérisé en ce que** le boulon d'entraînement (6) présente un alésage longitudinal (4) dans lequel est inséré un dispositif d'écartement comprenant un cône d'écartement (3) et une tige d'écartement (5).

3. . Outil de vissage tubulaire selon la revendication 2, **caractérisé en ce que** le taraud (7) est expansible grâce à un déplacement axial du cône d'écartement (3) en direction du taraud (7).

4. . Outil de vissage tubulaire selon les revendications 2 ou 3, **caractérisé en ce que** le dispositif d'écartement est traversé par des canaux (20) qui ont été réglés de façon à laisser circuler l'air.

5. . Outil de vissage tubulaire selon l'une des revendications précédentes, **caractérisé en ce qu'**est prévu un moyen de vissage (17) pour le vissage de la vis creuse (1) relié de façon non rotative avec le boulon d'entraînement (6).

6. . Outil de vissage tubulaire selon la revendication 5, **caractérisé en ce qu'**est prévu un ressort (18) venant exercer une force axiale sur un moyen de vissage (17) se déplaçant en direction axiale.
